# EUROPEAN PATENT APPLICATION

(11) **EP 4 485 731 A2**
(43) Date of publication of application: **01.01.2025**
(21) Application number: 24179466.8
(22) Date of filing: 03.06.2024
(51) Int. Cl.: H02J 1/10, H02J 3/38, H02M 1/32

(54) **PHOTOVOLTAIC INVERTER**

(30) Priority: 05.06.2023 CN 202310657091; 19.03.2024 CN 202410331508
(71) Applicant: Huawei Digital Power Technologies Co., Ltd., Shenzhen, 518043 (CN)
(72) Inventor: Cao, Zhen, Shenzhen, 518043 (CN); Liu, Chao, Shenzhen, 518043 (CN); Yang, Weiwei, Shenzhen, 518043 (CN); Xu, Houjian, Shenzhen, 518043 (CN); Gao, Yongbing, Shenzhen, 518043 (CN)
(74) Representative: Isarpatent

(57) **Abstract**

The present invention provides a photovoltaic inverter, including a first switch group, a second switch group, a DC/DC power conversion circuit, a bus capacitor, a switch status detection circuit, and a controller. One end of the first switch group is configured to connect to a first photovoltaic string, and the other end of the first switch group is configured to connect to the bus capacitor, so that when the first switch group is turned on, the controller is enabled to obtain power from the bus capacitor and be powered on. One end of the second switch group is configured to connect to a second photovoltaic string, and the other end of the second switch group is configured to connect to an input end of the DC/DC power conversion circuit, where the second photovoltaic string includes the first photovoltaic string. After the controller is powered on and the second switch group is turned on, the switch status detection circuit is configured to detect a turn-on or turn-off state of the first switch group; and if the first switch group is still turned on, the controller is configured to send an alarm signal, where the alarm signal is used to prompt a user to turn off the first switch group. In this way, the user may be prompted in a timely manner to turn off the first switch group, thereby improving safety of a photovoltaic power station.

## Description

### TECHNICAL FIELD

This application relates to the field of new energy power generation, and in particular, to a photovoltaic inverter.

### BACKGROUND

In recent years, as clean renewable energy, solar energy has been widely used. In a photovoltaic power station, a photovoltaic module converts solar energy into a direct current through photovoltaic effect, and transmits the direct current to a photovoltaic inverter. The photovoltaic inverter further converts the direct current into an alternating current that has a same frequency as mains. During operation of the photovoltaic power station, some photovoltaic strings may have a short-circuit fault due to long-term exposure outdoors. If the photovoltaic inverter cannot identify and rectify the short-circuit fault of the photovoltaic strings in a timely manner, the photovoltaic strings or even the inverter may be burnt. This may severely affect safety of the photovoltaic power station.

### SUMMARY

Embodiments of this application provide a photovoltaic inverter that can identify and rectify a short-circuit fault of a photovoltaic module in a timely manner, to improve safety and reliability of a photovoltaic power station.

According to a first aspect, an embodiment of this application provides a photovoltaic inverter, including a first switch group, a second switch group, a DC/DC power conversion circuit, a bus capacitor, a switch status detection circuit, and a controller. The first switch group does not have a remote turn-off capability, one end of the first switch group is configured to connect to a first photovoltaic string, and the other end of the first switch group is configured to connect to the bus capacitor, so that when the first switch group is turned on, the controller is enabled to obtain power from the bus capacitor and be powered on. The second switch group has a remote turn-off capability, one end of the second switch group is connected to a second photovoltaic string, and the other end of the second switch group is connected to a direct current input end of the DC/DC power conversion circuit. The first photovoltaic string is a part of the second photovoltaic string. A direct current output end of the DC/DC power conversion circuit is connected to the bus capacitor. After the controller is powered on and the second switch group is turned on, the switch status detection circuit is configured to detect a turn-on or turn-off state of the first switch group; and if the first switch group is still turned on, the controller is configured to send an alarm signal, where the alarm signal is used to prompt a user to turn off the first switch group.

During actual application, in consideration of costs, the second switch group has the remote turn-off capability while the first switch group usually does not have the remote turn-off capability. In other words, the second switch group may receive a trip signal sent by the controller to the second switch group, to turn off a corresponding switch in the second switch group in a timely manner when a current flowing through the second switch group is abnormal. In comparison, the first switch group cannot be controlled by the controller. When a current flowing through the first switch group is abnormal, the first switch group can only be manually turned off.

Specifically, before the photovoltaic inverter is grid-connected, the user may first turn on the first switch group, so that a first photovoltaic string supplies power to a direct current bus or the bus capacitor. With this arrangement, an auxiliary power supply may obtain power from the direct current bus or the bus capacitor, and supply power to the controller, so that the controller works normally. After the controller works normally, the user turns on the second switch group, so that electrical energy generated by the second photovoltaic string is input to the photovoltaic inverter. After the second switch group is turned on, if a string is reversely connected in the second photovoltaic string connected to the photovoltaic inverter, or if a current flowing through some switches in the second switch group is an overcurrent, the controller can identify the fault in a timely manner, and turn off a corresponding switch that is connected in series to the reversely connected photovoltaic string and that is in the second switch group. However, after the controller is powered on and the second switch group is turned on, if the user does not turn off the first switch group for a long time, once a short-circuit fault occurs inside the photovoltaic inverter, the controller cannot identify the fault in a timely manner and turn off the first switch group. As a result, a current flowing through the first photovoltaic string is abnormal for a long time. In serious cases, the first photovoltaic string and the photovoltaic inverter may even catch fire and explode.

Therefore, after the controller is powered on and the second switch group is turned on, the switch status detection circuit is disposed, so that the controller can obtain the turn-on or turn-off state of the first switch group in real time, and send the alarm signal in a timely manner when the first switch group is turned on, to prompt the user to turn off the first switch group. This improves safety and reliability of a photovoltaic power station.

During actual application, the second photovoltaic string is usually connected in series to the second switch group through direct current ports of the photovoltaic inverter. It should be noted that, in this application, the direct current port is a general term for functions. One direct current port may be further divided into a positive electrode port and a negative electrode port. The positive electrode port is configured to connect to positive electrodes of one or more photovoltaic strings, and the negative electrode port is configured to connect to negative electrodes of one or more photovoltaic strings.

A quantity of switches in the first switch group is not limited in this application. To be specific, there is at least one switch on a connection line of the first photovoltaic string and the DC/DC power converter, and the switch can implement effect of connecting and disconnecting the first photovoltaic string. For example, a switch may be connected in series to a positive output end of the first photovoltaic string, or a switch may be connected in series to a negative output end of the first photovoltaic string. Certainly, a switch may be connected in series to both the positive output end of the first photovoltaic string and the negative output end of the first photovoltaic string. This is not limited in this application.

A quantity of switches in the second switch group is not limited in this application either. To be specific, there is at least one switch on a connection line of each port and the DC/DC power converter. Details are not described again.

It should be noted that, that the other end of the first switch group is configured to connect to the bus capacitor means that electrical energy generated by the first photovoltaic string may be used for charging the bus capacitor via the first switch group, so that the bus capacitor supplies power to the controller. During actual application, there may be another component between the first switch group and the bus capacitor, for example, a DC/DC power converter. This is not limited in this application.

In a possible implementation, the photovoltaic inverter includes an anti-reverse circuit. The anti-reverse circuit is connected in series to the first switch group and then connected between the first photovoltaic string and the bus capacitor, and the anti-reverse circuit is configured to prevent a reverse current from flowing into the bus capacitor when the first switch group is turned on and the first photovoltaic string is reversely connected. For example, one end of the anti-reverse circuit is configured to connect to the first switch group, and the other end of the anti-reverse circuit is configured to connect to the bus capacitor; or one end of the anti-reverse circuit is configured to connect to the first photovoltaic string, and the other end of the anti-reverse circuit is configured to connect to the first switch group. The anti-reverse circuit is disposed, so that it ensures that the first photovoltaic string is correctly connected to the photovoltaic inverter, to charge the direct current bus.

In a possible implementation, one end of the anti-reverse circuit is connected to the direct current input end of the DC/DC power conversion circuit via the first switch group, the other end of the anti-reverse circuit is configured to connect to the first photovoltaic string, and the switch status detection circuit is configured to detect a voltage between a first detection point and a second detection point. The first detection point is located between a positive electrode of the first photovoltaic string and the bus capacitor, the second detection point is located between a negative electrode of the first photovoltaic string and the bus capacitor, one of the first detection point and the second detection point is located between the first photovoltaic string and the first switch group, and the other of the first detection point and the second detection point is located between the first switch group and the direct current input end of the DC/DC power conversion circuit. When the first switch group is turned on, the voltage between the first detection point and the second detection point is equal to a voltage at the direct current input end of the DC/DC power conversion circuit, and the controller is configured to send the alarm signal. When the anti-reverse circuit is connected to the direct current input end of the DC/DC power conversion circuit, a part of circuits in the DC/DC power conversion circuit may be reused. This further reduces used lines and optimizes internal space of the photovoltaic inverter.

With this arrangement, detection precision of the voltage between the first detection point and the second detection point can be improved, and impact of voltages at two ends of the first photovoltaic string and the voltage at the direct current input end of the DC/DC power conversion circuit on detection precision can be avoided.

In a possible implementation, one end of the anti-reverse circuit is connected to the direct current output end of the DC/DC power conversion circuit via the first switch group, the other end of the anti-reverse circuit is configured to connect to the first photovoltaic string, and the switch status detection circuit is configured to detect a voltage between a first detection point and a second detection point. The first detection point is located between a positive electrode of the first photovoltaic string and the bus capacitor, the second detection point is located between a negative electrode of the first photovoltaic string and the bus capacitor, one of the first detection point and the second detection point is located between the first photovoltaic string and the first switch group, and the other of the first detection point and the second detection point is located between the first switch group and the direct current output end of the DC/DC power conversion circuit. When the first switch group is turned on, the voltage between the first detection point and the second detection point is equal to a voltage at the direct current input end of the DC/DC power conversion circuit, and the controller is configured to send the alarm signal.

With this arrangement, detection precision of the voltage between the first detection point and the second detection point can be improved, and impact of voltages at two ends of the first photovoltaic string and a voltage at the direct current output end of the DC/DC power conversion circuit on detection precision can be avoided.

In a possible implementation, one end of the first switch group is connected to the direct current input end of the DC/DC power conversion circuit via the anti-reverse circuit, the other end of the first switch group is configured to connect to the first photovoltaic string, and the switch status detection circuit is configured to detect a voltage between a first detection point and a second detection point. The first detection point is located between a positive electrode of the first photovoltaic string and the bus capacitor, the second detection point is located between a negative electrode of the first photovoltaic string and the bus capacitor, and at least one of the first detection point and the second detection point is located between the first switch group and the anti-reverse circuit. When the first switch group is turned on, the voltage between the first detection point and the second detection point is equal to a voltage at the direct current input end of the DC/DC power conversion circuit, and the controller is configured to send the alarm signal.

With this arrangement, detection precision of the voltage between the first detection point and the second detection point can be improved, and impact of voltages at two ends of the first photovoltaic string and the voltage at the direct current input end of the DC/DC power conversion circuit on detection precision can be avoided.

In a possible implementation, one end of the first switch group is connected to the direct current output end of the DC/DC power conversion circuit via the anti-reverse circuit, the other end of the first switch group is configured to connect to the first photovoltaic string, and the switch status detection circuit is configured to detect a voltage between a first detection point and a second detection point. The first detection point is located between a positive electrode of the first photovoltaic string and the bus capacitor, the second detection point is located between a negative electrode of the first photovoltaic string and the bus capacitor, and at least one of the first detection point and the second detection point is located between the first switch group and the anti-reverse circuit. When the first switch group is turned on, the voltage between the first detection point and the second detection point is equal to a voltage at the direct current input end of the DC/DC power conversion circuit, and the controller is configured to send the alarm signal.

With this arrangement, detection precision of the voltage between the first detection point and the second detection point can be improved, and impact of voltages at two ends of the first photovoltaic string and a voltage at the direct current output end of the DC/DC power conversion circuit on detection precision can be avoided.

In a possible implementation, one end of the anti-reverse circuit is connected to the direct current input end of the DC/DC power conversion circuit via the first switch group, the other end of the anti-reverse circuit is configured to connect to the first photovoltaic string, and the switch status detection circuit is configured to detect a current flowing through a third detection point. The third detection point is located between the first photovoltaic string and the first switch group. When the first switch group is turned on, the current flowing through the third detection point is greater than a specified current threshold, and the controller is configured to send the alarm signal. The specified current threshold is greater than 0 and less than a current at the direct current input end of the DC/DC power conversion circuit.

With this arrangement, detection precision of the current flowing through the third detection point can be improved, and impact of the current at the direct current input end of the DC/DC power conversion circuit on detection precision can be avoided.

In a possible implementation, one end of the first switch group is connected to the direct current input end of the DC/DC power conversion circuit via the anti-reverse circuit, the other end of the first switch group is configured to connect to the first photovoltaic string, and the switch status detection circuit is configured to detect a current flowing through a third detection point. The third detection point is located between the first photovoltaic string and the anti-reverse circuit. When the first switch group is turned on, the current flowing through the third detection point is greater than a specified current threshold, and the controller is configured to send the alarm signal. The specified current threshold is greater than 0 and less than a current at the direct current input end of the DC/DC power conversion circuit.

With this arrangement, detection precision of the current flowing through the third detection point can be improved, and impact of the current at the direct current input end of the DC/DC power conversion circuit on detection precision can be avoided.

In a possible implementation, the first switch group includes an auxiliary contact switch and a main contact switch. The auxiliary contact switch and the main contact switch have a same turn-on or turn-off state, one end of the main contact switch is configured to connect to the first photovoltaic string, the other end of the main contact switch is configured to connect to the bus capacitor, and the auxiliary contact switch is connected to the switch status detection circuit. When the auxiliary contact switch is turned on, the controller is configured to send the alarm signal.

Specifically, the turn-on or turn-off state of the main contact switch in the first switch group determines whether electrical energy generated by the first photovoltaic string can be smoothly transmitted to the bus capacitor, and the auxiliary contact switch in the first switch group is mainly configured to reflect the turn-on or turn-off state of the main contact switch. In other words, when the main contact switch is turned on, a direct current output by the first photovoltaic string flows through the main contact switch and does not flow through the auxiliary contact switch.

With this arrangement, the switch status detection circuit can indirectly obtain the turn-on or turn-off state of the main contact switch. This avoids a large current from flowing through the switch status detection circuit, ensures detection accuracy of the switch status detection circuit, and reduces a fault probability of the switch status detection circuit.

In a possible implementation, the switch status detection circuit includes a second resistor, a third resistor, and an operational amplifier. One end of the second resistor is configured to connect to a stable volt current condenser, the other end of the second resistor is configured to connect to an analog ground via the third resistor, a connection point at which the second resistor and the third resistor are connected in series is configured to connect to the analog ground via the auxiliary contact switch , the connection point at which the second resistor and the third resistor are connected in series is further configured to connect to an input end of the operational amplifier, and an output end of the operational amplifier is connected to the controller.

In a possible implementation, when the auxiliary contact switch is turned on, the connection point at which the second resistor and the third resistor are connected in series outputs a zero voltage to the operational amplifier, the operational amplifier is configured to output a zero level to the controller, and the controller is configured to send the alarm signal.

With this arrangement, as the auxiliary contact switch is turned on or turned off, that is, the turn-on or turn-off state of the first switch group changes, the voltage output to the operational amplifier by the connection point at which the second resistor and the third resistor are connected in series also changes, so that the controller learns of whether the first switch group is turned on, and sends the alarm signal in a timely manner when the first switch group is turned on, to prompt the user to turn off the first switch group.

In a possible implementation, the photovoltaic inverter includes an indicator light. If the first switch group is turned on to enable the controller to obtain power from the bus capacitor and be powered on, the indicator light is on. That the indicator light is on indicates the user to turn on the second switch group. After the second switch group is turned on, if the first switch group is still turned on, that the controller is configured to send an alarm signal includes: The controller is configured to control a color change of the indicator light; and the controller is configured to control a blinking frequency change of the indicator light.

With this arrangement, after a direct current of the second photovoltaic string is normally transmitted to the photovoltaic inverter, a state change of the indicator light can effectively prompt the user to manually turn off the first switch group. Later, even if a short-circuit or overcurrent fault occurs in the first photovoltaic string, the second switch group can also rectify the fault in a timely and reliable manner. This improves safety and reliability of a photovoltaic system.

In a possible implementation, the photovoltaic inverter includes an alarm light. After the second switch group is turned on, if the first switch group is still turned on, that the controller is configured to send an alarm signal includes: The controller is configured to control the alarm light to be on.

With this arrangement, after a direct current of the second photovoltaic string is normally transmitted to the photovoltaic inverter, the on alarm light can effectively prompt the user to manually turn off the first switch group. Later, even if a short-circuit or overcurrent fault occurs in the first photovoltaic string, the second switch group can also rectify the fault in a timely and reliable manner. This improves safety and reliability of a photovoltaic system.

In a possible implementation, after the second switch group is turned on, if the first switch group is still turned on, that the controller is configured to send an alarm signal includes: The controller is configured to send the alarm signal to a client or a master computer.

With this arrangement, after a direct current of the second photovoltaic string is normally transmitted to the photovoltaic inverter, alarm signals of the client and the master computer can effectively prompt the user to manually turn off the first switch group. Later, even if a short-circuit or overcurrent fault occurs in the first photovoltaic string, the second switch group can also rectify the fault in a timely and reliable manner. This improves safety and reliability of a photovoltaic system.

In a possible implementation, the anti-reverse circuit includes one or more diodes, and a conduction direction of the diode is opposite to a direction of the reverse current.

In conclusion, the photovoltaic inverter provided in this application can: identify the state of the first switch group in a timely and accurate manner through simple circuit setting; and when the first switch group is turned on, send the alarm signal, to prompt the user to turn off the first switch group. This significantly improves safety and reliability of the photovoltaic power station.

### BRIEF DESCRIPTION OF DRAWINGS

FIG. 1 is a networking schematic of an optical storage system;
FIG. 2a is a flow direction diagram of a current when a photovoltaic string is normally connected according to this application;
FIG. 2b is a flow direction diagram of a current when some photovoltaic strings are reversely connected according to this application;
FIG. 2c is a flow direction diagram of a current when all photovoltaic strings are reversely connected according to this application;
FIG. 3 is a topology diagram of a direct current side of a photovoltaic inverter that can protect a photovoltaic string according to this application;
FIG. 4a to FIG. 4d are topology diagrams of direct current sides of several photovoltaic inverters that can protect a photovoltaic string according to this application;
FIG. 5 is a topology diagram of a direct current side of a photovoltaic inverter that can protect a photovoltaic string according to this application;
FIG. 6a to FIG. 6d are topology diagrams of direct current sides of several photovoltaic inverters that can protect a photovoltaic string according to this application;
FIG. 7a to FIG. 7d are topology diagrams of direct current sides of several photovoltaic inverters that can identify a turn-on or turn-off state of a first switch group according to this application;
FIG. 8 is a topology diagram of a direct current side of a photovoltaic inverter that can identify a turn-on or turn-off state of a first switch group according to this application; and
FIG. 9a and FIG. 9b are topology diagrams of direct current sides of two photovoltaic inverters that can identify a turn-on or turn-off state of a first switch group according to this application.

### DESCRIPTION OF EMBODIMENTS

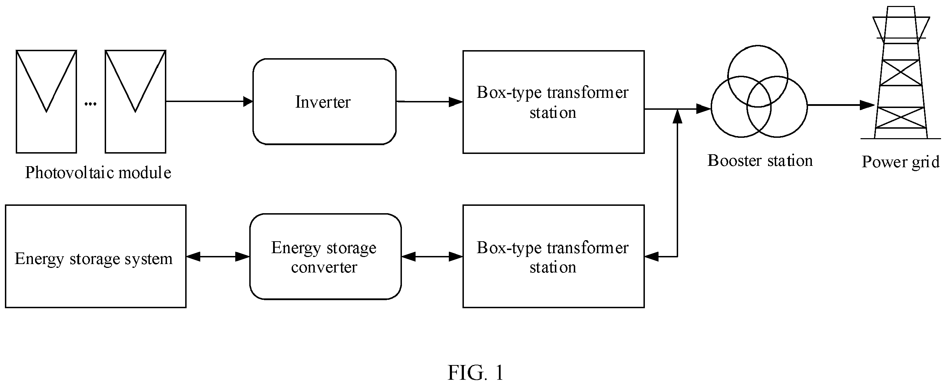

FIG. 1 is a networking schematic of an optical storage system in an alternating current coupling scenario. A photovoltaic module converts solar energy into a direct current through photovoltaic effect; and an inverter converts the direct current output by the photovoltaic module into an alternating current, and further transmits the alternating current to a box-type transformer station. The box-type transformer station converts the low-voltage alternating current output by the inverter into a medium-voltage alternating current, and further transmits the alternating current to a booster station (power grid) or a box-type transformer station corresponding to an energy storage system. The energy storage system stores unstable electrical energy from the photovoltaic module and outputs stable electrical energy to the power grid via an energy storage converter and the corresponding box-type transformer station.

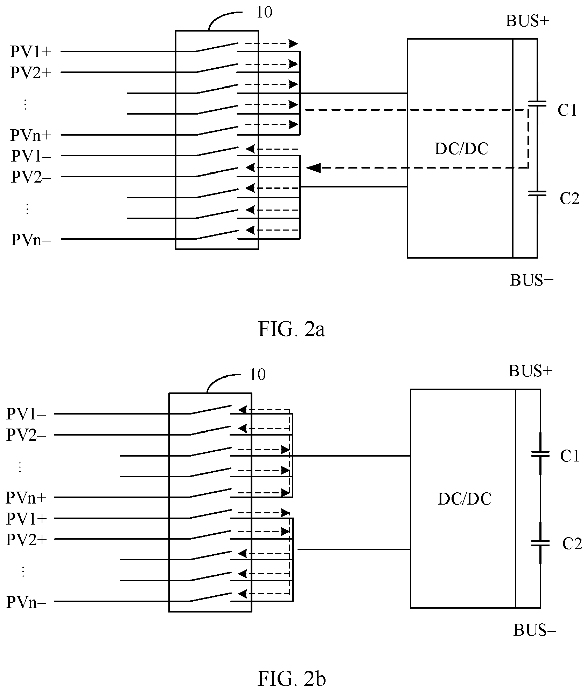

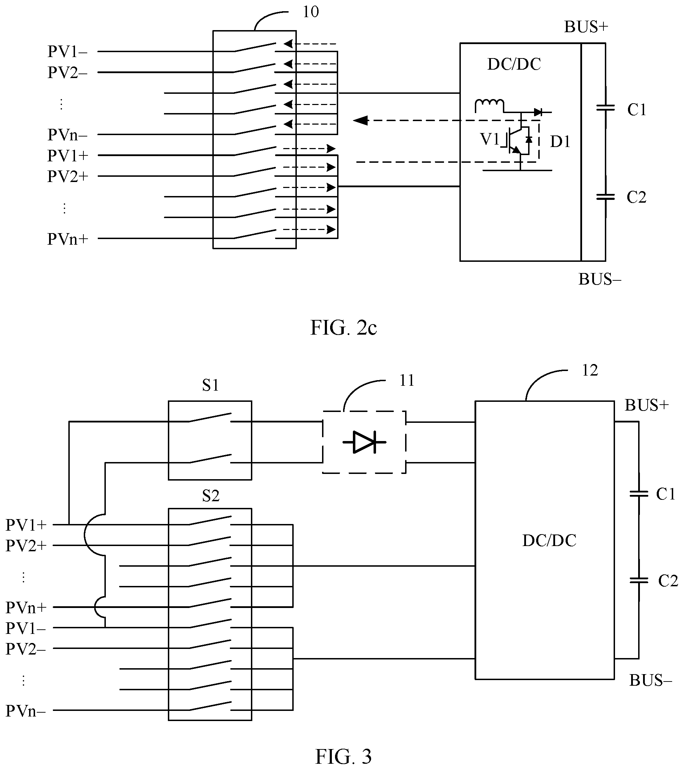

When the photovoltaic inverter is grid-connected for the first time, some or all photovoltaic strings may be reversely connected. If that some or all photovoltaic strings may be reversely connected is not identified and handled in a timely manner, the photovoltaic strings or even the photovoltaic inverter may be damaged. With reference to FIG. 2a, FIG. 2b, and FIG. 2c, the following separately analyzes a flow direction of a direct current when all photovoltaic strings are normally connected, when some photovoltaic strings are reversely connected, and when all photovoltaic strings are reversely connected.

First, refer to FIG. 2a. FIG. 2a is a flow direction diagram of a direct current generated by a photovoltaic string when all photovoltaic strings are normally connected to a photovoltaic inverter. A plurality of photovoltaic strings are connected in parallel to a direct current/direct current (DC/DC) conversion circuit of the photovoltaic inverter via switches 10 on a direct current side of the photovoltaic inverter. A quantity of photovoltaic strings connected to the photovoltaic inverter is n, where n is a positive integer greater than or equal to 1. It should be noted that one photovoltaic string may include one or more photovoltaic panels, and each photovoltaic panel includes a plurality of photovoltaic cells. PVn+ represents a positive electrode of a photovoltaic string n, and PVn- represents a negative electrode of a photovoltaic string n. When a photovoltaic module generates a direct current, the direct current flows out from PVn+, charges bus capacitors C1 and C2 sequentially via the DC/DC conversion circuit and a positive direct current bus, and finally flows into PVn-through a negative direct current bus, to implement a current loop. It should be noted that, in addition to the switches 10 on the direct current side, the DC/DC conversion circuit, and the bus capacitors C1 and C2 shown in FIG. 2a, during actual application, the photovoltaic inverter further includes a direct current/alternating current (DC/AC) conversion circuit, an LCL filter, a relay, and the like that are not shown in FIG. 2a. Details are not described in this application.

In the following, refer to FIG. 2b. FIG. 2b is a flow direction diagram of a direct current generated by a photovoltaic string when some photovoltaic strings are reversely connected. The reversely connected photovoltaic strings are a photovoltaic string 1 and a photovoltaic string 2. In other words, in comparison with FIG. 2a, PV1+ and PV1- are interchanged, and PV2+ and PV2- are also interchanged. In this case, when the switches 10 on the direct current side of the photovoltaic inverter are turned on, direct currents generated by PV(n-2)+ to PVn+ are directly fed into PV1- and PV2-, and direct currents flowing out of PV1+ and PV2+ flow into PV(n-2)- to PVn- to form a current loop (where a current of the current loop is referred to as a reverse current), which further causes a direct current bus to lose power. As a result, an auxiliary power supply of the photovoltaic inverter cannot obtain supply from the direct current bus or from the bus capacitor, and cannot supply power to a controller. Therefore, the controller of the photovoltaic inverter cannot identify, in a timely manner, whether a reverse connection occurs at a photovoltaic string and which specific photovoltaic string is reversely connected. Certainly, the controller cannot turn off, in a timely manner, a switch that is in the switches 10 on the direct current side of the photovoltaic inverter and that is connected in series to the reversely connected photovoltaic string to rectify the fault.

Then, refer to FIG. 2c. FIG. 2c is a flow direction diagram of a direct current generated by a photovoltaic string when all photovoltaic strings are reversely connected. When all the photovoltaic strings are reversely connected, in comparison with FIG. 2a, PVn+ and PVn- are interchanged. In this case, when the switches 10 on the direct current side of the photovoltaic inverter are turned on, direct currents generated by PV1+ to PVn+ pass through a diode D1 connected in anti-parallel to a switching transistor V1 in a Boost circuit of the direct current/direct current (DC/DC) conversion circuit to form a short-circuit loop, which further causes a direct current bus to lose power as well. As a result, an auxiliary power supply of the inverter cannot obtain power from the direct current bus or from the bus capacitor, and cannot supply power to a controller. Similarly, the controller of the inverter cannot identify, in a timely manner, whether a reverse connection occurs at a photovoltaic string and a specific location in which the reverse connection occurs at the photovoltaic string. Certainly, the controller also cannot turn off, in a timely manner, a switch that is in the switches 10 on the direct current side of the photovoltaic inverter and that is connected in series to the reversely connected photovoltaic string to rectify the reverse connection fault.

The following specifically describes embodiments of this application with reference to FIG. 3 to FIG. 6d.

First, refer to FIG. 3. FIG. 3 is a topology diagram of a direct current side of a photovoltaic inverter that can protect a photovoltaic string in a timely manner according to this application. Specifically, a first photovoltaic string (PV1) is connected to a DC/DC power conversion circuit 12 via a first switch group S1 and an anti-reverse circuit 11, and a second photovoltaic string (the first photovoltaic string PV1 to an n^{th} photovoltaic string PVn, where n is greater than or equal to 2) is connected to the DC/DC power conversion circuit 12 via a second switch group S2. The first photovoltaic string PV1 is a part of the second photovoltaic string. It should be noted that, in consideration of costs, the first switch group S1 usually does not have a remote turn-off capability while the second switch group S2 has a remote turn-off capability. In other words, the second switch group S2 may receive a trip signal sent by a controller (not shown) to the second switch group S2, to turn off a corresponding switch in the second switch group S2 in a timely manner when a current flowing through the second switch group S2 is abnormal. In comparison, the first switch group S1 cannot be controlled by the controller. When a current flowing through the first switch group S1 is abnormal, the first switch group S1 can only be manually turned off. A working principle of the topology is as follows: Before the photovoltaic inverter is grid-connected, a user first needs to turn on the first switch group S1. If the first photovoltaic string PV1 is normally connected, that is, the first photovoltaic string PV1 is not reversely connected, the anti-reverse circuit 11 can be normally conducted, and a direct current bus and bus capacitors C1 and C2 are powered on, so that an auxiliary power supply (not shown) can obtain power from the direct current bus or the bus capacitors C1 and C2 and supply power to the controller. Then, the user turns on the second switch group S2. In this case, the controller is powered on. Therefore, the controller may determine, in real time, whether there is a reversely connected photovoltaic string in the second photovoltaic string connected to the DC/DC power conversion circuit 12. If there is a reversely connected photovoltaic string in the second photovoltaic string, the controller may turn off a switch that is in the second switch group S2 and that is connected in series to the reversely connected photovoltaic string, to rectify the reverse connection fault. If all photovoltaic strings in the second photovoltaic string are normally connected to the photovoltaic inverter, the user needs to continue to turn off the first switch group S1. The detailed causes are described below.

In FIG. 3, the first photovoltaic string PV1 is connected to the DC/DC power conversion circuit 12 sequentially via the first switch group S1 and the anti-reverse circuit 11. During actual application, the first photovoltaic string PV1 may be alternatively connected to the DC/DC power conversion circuit 12 sequentially via the anti-reverse circuit 11 and the first switch group S1.

It should be further noted that, in FIG. 3, the first switch group S1 includes two switches. The two switches are respectively connected to the anti-reverse circuit 11 via a positive electrode PV1+ of the first photovoltaic string and a negative electrode PV1- of the first photovoltaic string. During actual application, a quantity of switches in the first switch group S1 is not limited to two. To be specific, there may be one or more switches in the first switch group S1. This is not limited in this application. When there is only one switch in the first switch group S1, the switch may be connected to the positive electrode PV1+ of the first photovoltaic string, or may be connected to the negative electrode PV1- of the first photovoltaic string. This is not limited in this application. According to a same principle, a quantity of switches in the second switch group S2 is not limited in this application either. To be specific, there may be one or more switches on a connection line of each photovoltaic string and the DC/DC power conversion circuit 12.

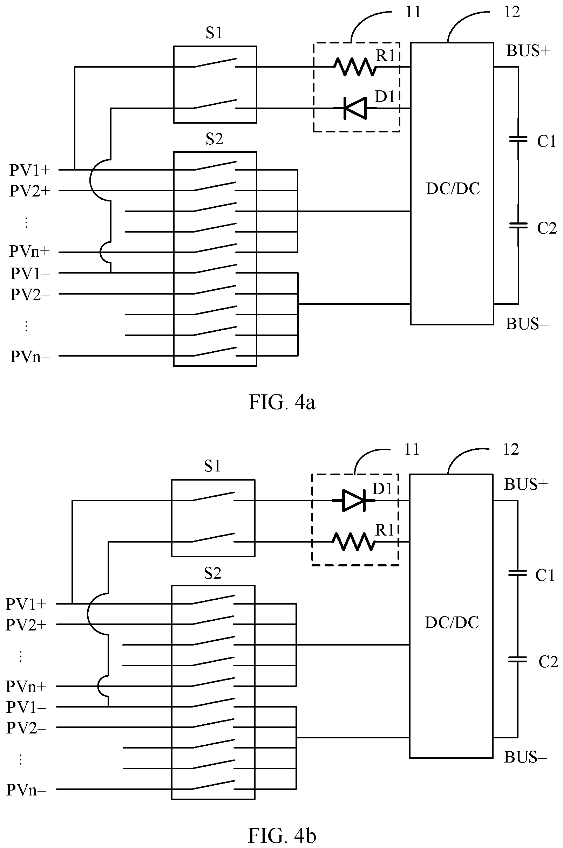

With reference to FIG. 4a, the following specifically shows a structure of the anti-reverse circuit 11. The anti-reverse circuit 11 includes a first resistor R1 and a diode D1. One end of the first resistor R1 is connected to the positive electrode PV1+ of the first photovoltaic string, the other end of the first resistor R1 is connected to a direct current input end of the DC/DC power conversion circuit 12, an anode of the diode D1 is connected to the direct current input end of the DC/DC power conversion circuit 12, and a cathode of the diode D1 is connected to the negative electrode PV1- of the first photovoltaic string. With this arrangement, it ensures that the first photovoltaic string PV1 is normally connected to the photovoltaic inverter, and a reverse current is not flowed into the bus capacitors C1 and C2, so that the controller normally obtains power and is powered on. According to a same principle, for a structure of the anti-reverse circuit 11, refer to FIG. 4b. Different from the structure shown in FIG. 4a, in FIG. 4b, the anode of the diode D1 is connected to the positive electrode PV1+ of the first photovoltaic string, the cathode of the diode D1 is connected to the direct current input end of the DC/DC power conversion circuit 12, one end of the first resistor R1 is connected to the negative electrode PV1 - of the first photovoltaic string, and the other end of the first resistor R1 is connected to the direct current input end of the DC/DC power conversion circuit 12.

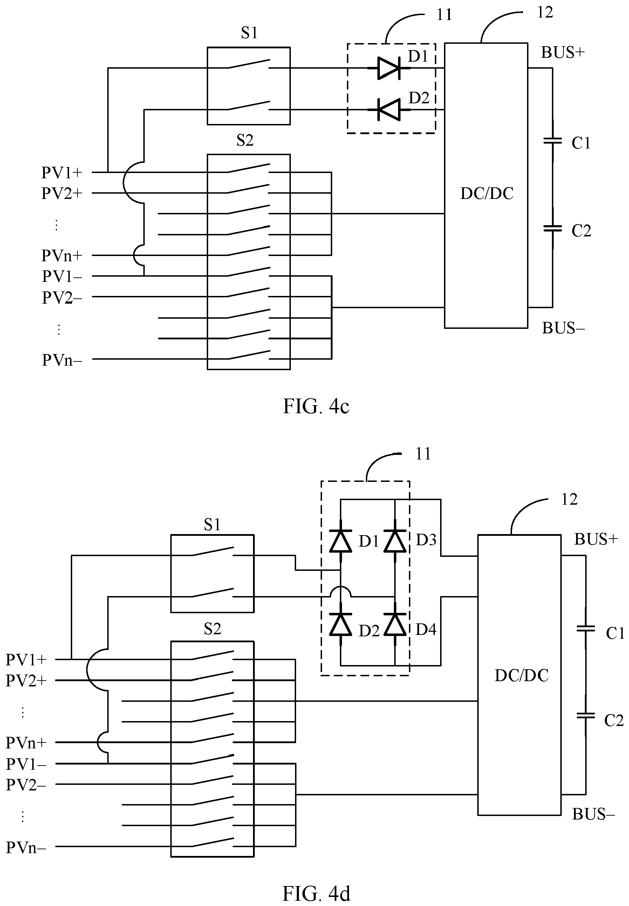

With reference to FIG. 4c, the following specifically shows another structure of the anti-reverse circuit 11. Different from the structures shown in FIG. 4a and FIG. 4b, the anti-reverse circuit 11 shown in FIG. 4c includes two diodes: a diode D1 and a diode D2. An anode of the diode D1 is connected to the positive electrode PV1+ of the first photovoltaic string, a cathode of the diode D1 is connected to the DC/DC power conversion circuit 12, an anode of the diode D2 is connected to the DC/DC power conversion circuit 12, and a cathode of the diode D2 is connected to the negative electrode PV1- of the first photovoltaic string. The two diodes are disposed in the anti-reverse circuit 11, so that the anti-reverse circuit 11 can still work even if a short-circuit fault occurs on one of the two diodes. It ensures that a current output by the first photovoltaic string flows through the direct current bus and the bus capacitors C1 and C2 to power on the controller via the auxiliary power supply, so that the controller is capable of identifying a reverse connection fault of the photovoltaic string.

With reference to FIG. 4d, the following specifically shows still another structure of the anti-reverse circuit 11. Different from the structures shown in FIG. 4a, FIG. 4b, and FIG. 4c, the anti-reverse circuit 11 shown in FIG. 4d is a full-bridge circuit. Specifically, the anti-reverse circuit 11 includes a first bridge arm and a second bridge arm that are connected in parallel, the first bridge arm includes a diode D1 and a diode D2 that are connected in series, and the second bridge arm includes a diode D3 and a diode D4 that are connected in series. The positive electrode PV1+ of the first photovoltaic string is connected, via the first switch group S1, to a connection point at which the diode D1 and the diode D2 are connected in series, and the negative electrode PV1- of the first photovoltaic string is connected, via the first switch group S1, to a connection point at which the diode D3 and the diode D4 are connected in series. A cathode of the diode D1 is connected to a cathode of the diode D3, a connection point at which the diode D1 and the diode D3 are connected in parallel is connected to the DC/DC power conversion circuit 12, an anode of the diode D2 is connected to an anode of the diode D4, and a connection point at which the diode D2 and the diode D4 are connected in parallel is connected to the DC/DC power conversion circuit 12. With this arrangement, it also ensures that a current output by the first photovoltaic string flows through the direct current bus and the bus capacitors C1 and C2 to power on the controller via the auxiliary power supply, so that the controller is capable of identifying a reverse connection fault of the photovoltaic string. Similar to the structure shown in FIG. 4c, even if a short-circuit fault occurs on one of the diode D1 to the diode D4, the anti-reverse circuit 11 can still work normally. In addition, it should be noted that, during actual application, resistors may alternatively be connected in series on the first bridge arm and the second bridge arm to implement a current limiting function. This is not limited in this application.

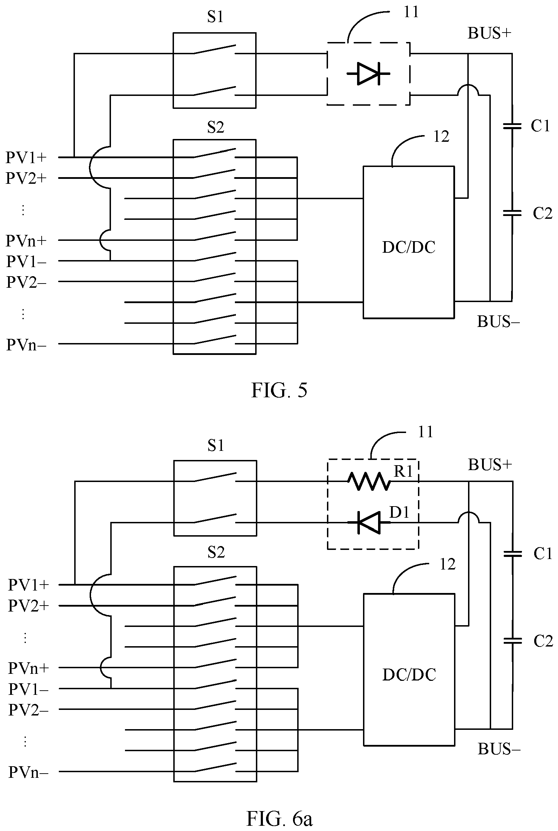

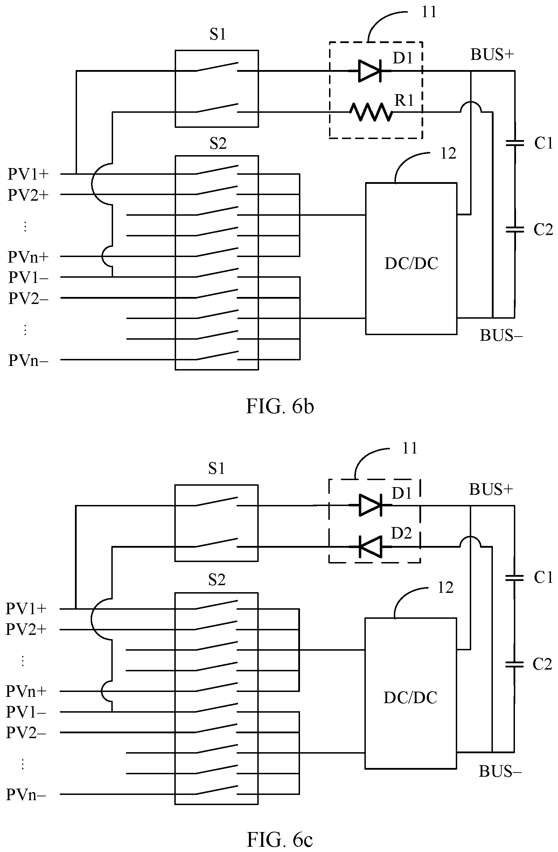

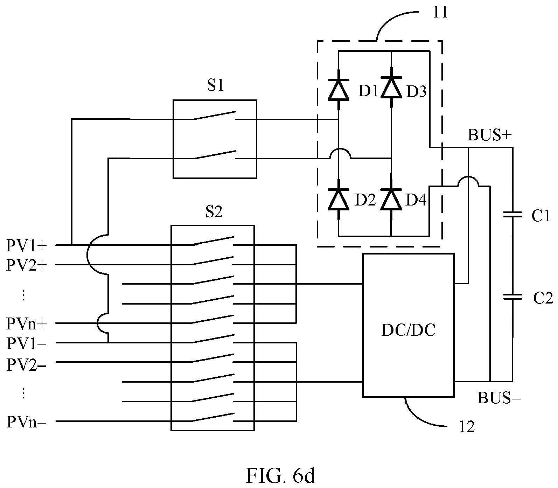

In the foregoing embodiments, the first photovoltaic string PV1 is connected to the input end of the DC/DC power conversion circuit 12 via the first switch group S1 and the anti-reverse circuit 11. During actual application, the first photovoltaic string PV1 may alternatively be connected to an output end of the DC/DC power conversion circuit 12 via the first switch group S1 and the anti-reverse circuit 11. The following describes embodiments of this application with reference to FIG. 5 and FIG. 6a to FIG. 6d.

FIG. 5 is a topology diagram of a direct current side of a photovoltaic inverter that can identify, in a timely manner, a reversely connected photovoltaic string according to this application. Different from FIG. 3, in FIG. 5, the first photovoltaic string PV1 is connected to an output end of the DC/DC power conversion circuit 12 via the first switch group S1 and the anti-reverse circuit 11, and the output end of the DC/DC power conversion circuit 12 is configured to connect to the bus capacitor. For other content, refer to the related descriptions in FIG. 3. Details are not described herein again.

In FIG. 5, the first photovoltaic string PV1 is connected to the DC/DC power conversion circuit 12 sequentially via the first switch group S1 and the anti-reverse circuit 11. During actual application, the first photovoltaic string PV1 may be alternatively connected to the DC/DC power conversion circuit 12 sequentially via the anti-reverse circuit 11 and the first switch group S1.

It should be further noted that, in FIG. 5, the first switch group S1 includes two switches. The two switches are respectively connected to the anti-reverse circuit 11 via a positive electrode PV1+ of the first photovoltaic string and a negative electrode PV1- of the first photovoltaic string. During actual application, a quantity of switches in the first switch group S1 is not limited to two. To be specific, there may be one or more switches in the first switch group S1. This is not limited in this application. When there is only one switch in the first switch group S1, the switch may be connected to the positive electrode PV1+ of the first photovoltaic string, or may be connected to the negative electrode PV1- of the first photovoltaic string. This is not limited in this application. According to a same principle, a quantity of switches in the second switch group S2 is not limited in this application either. To be specific, there may be one or more switches on a connection line of each photovoltaic string and the DC/DC power conversion circuit 12.

Similarly, different from the topologies shown in FIG. 4a to FIG. 4d, in FIG. 6a to FIG. 6d, the first photovoltaic string PV1 is connected to the output end of the DC/DC power conversion circuit 12 via the first switch group S1 and the anti-reverse circuit 11. For other content, refer to the descriptions in FIG. 4a to FIG. 4d. Details are not described again.

As described above, the first switch group S1 does not have the remote turn-off capability. Therefore, after the controller is powered on and the second switch group S2 is turned on, if the user does not turn off the first switch group S1 for a long time, once a fault such as a short circuit or a reverse connection occurs inside the photovoltaic inverter, the controller cannot identify the fault in a timely manner and turn off the first switch group S1. As a result, a current flowing through the first photovoltaic string PV1 is abnormal for a long time. In serious cases, the first photovoltaic string PV1 and the photovoltaic inverter may even catch fire and explode. It can be learned that, after the second photovoltaic string is normally connected to the photovoltaic inverter, the user further needs to continue to turn off the first switch group S 1. However, because an actual installation scenario of the photovoltaic inverter is uncontrollable, there may be a case in which the user forgets to turn off the first switch group S1.

To prompt the user to turn off the first switch group S1, the photovoltaic inverter includes an indicator light. After the first switch group S1 is turned on, if the first photovoltaic string PV1 is normally connected to the photovoltaic inverter, the first photovoltaic string PV1 may smoothly transmit a direct current to the direct current bus or the bus capacitors C1 and C2, so that the controller obtains power and is powered on. In this case, the controller is configured to control the indicator light to be on, and the on indicator light indicates that the controller in the photovoltaic inverter has worked normally, to prompt the user to continue to turn on the second switch group S2. After the second switch group S2 is turned on, the indicator light is further configured to prompt the user to continue to turn off the first switch group S 1. For example, after the second photovoltaic string is normally connected to the photovoltaic inverter, if the user forgets to turn off the first switch group S1, the controller may send an alarm signal. The alarm signal includes a color change or a blinking frequency change of the indicator light, to prompt the user to continue to turn off the first switch group S1. After the first switch group S1 is turned off, the second photovoltaic string is connected to the photovoltaic inverter only via the second switch group S2 that can be remotely turned off. Subsequently, even if a fault such as a reverse connection or an overcurrent occurs in the photovoltaic string connected to the photovoltaic inverter, the controller of the photovoltaic inverter can identify the fault in a timely manner and rectify the fault in a timely manner.

In addition, to effectively prompt the user to turn off the first switch group S1, the photovoltaic inverter may further include an alarm light. After the second photovoltaic string is normally connected to the photovoltaic inverter, if the user forgets to turn off the first switch group S1, the alarm light is configured to prompt the user to turn off the first switch group S1. For example, after the second photovoltaic string is normally connected to the photovoltaic inverter, if the first switch group S1 is turned on, the controller is configured to send an alarm signal. The alarm signal includes that the alarm light is on, and the on alarm light is configured to prompt the user to turn off the first switch group S1. After the first switch group S1 is turned off, the controller is configured to control the alarm light to be off. The off alarm light indicates that the photovoltaic inverter is safely grid-connected. During actual application, the alarm light may be set to an eye-catching color. This is not specifically limited.

In addition, to effectively prompt the user to turn off the first switch group S1, the controller may further send the alarm signal to an application, a client, or a master computer. For example, after the second photovoltaic string is normally connected to the photovoltaic inverter, if the user forgets to turn off the first switch group S1, the controller is configured to send, to an application (App) of a mobile phone of the user, an alarm signal indicating that the first switch group S1 is not turned off, so that the user learns of a status of the first switch group S1 in a timely manner and manually turns off the first switch group S1, and the photovoltaic inverter is safely grid-connected.

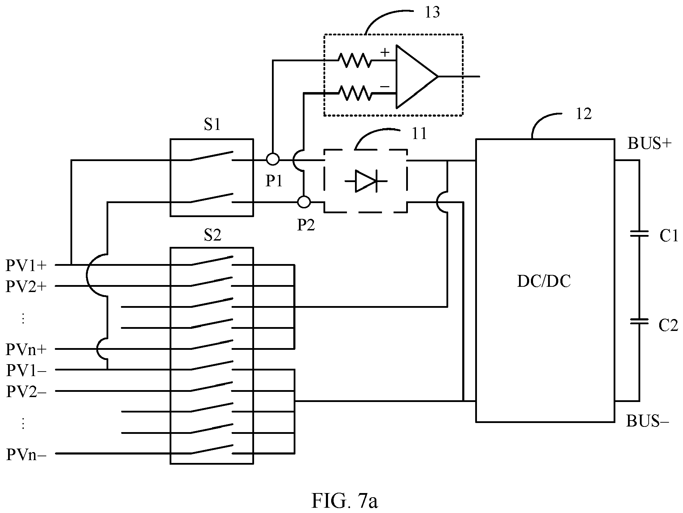

Further, to enable the controller to accurately obtain the status of the first switch group S1, the photovoltaic inverter further includes a switch status detection circuit. The following specifically describes a status detection principle of the first switch group S1 with reference to FIG. 7a to FIG. 9b.

Refer to FIG. 7a. Different from the topology shown in FIG. 3, FIG. 7a further includes a switch status detection circuit. The switch status detection circuit is a voltage detection circuit 13. Specifically, one end of the first switch group S1 is connected to the direct current input end of the DC/DC power conversion circuit 12 via the anti-reverse circuit 11 (for a specific structure, refer to the description above, and examples are not enumerated), the other end of the first switch group S1 is configured to connect to the first photovoltaic string PV1, and the switch status detection circuit 13 is configured to detect a voltage between a first detection point P1 and a second detection point P2. The first detection point P1 is located between a positive electrode PV1+ of the first photovoltaic string and the bus capacitors C1 and C2, the second detection point P2 is located between a negative electrode PV1- of the first photovoltaic string and the bus capacitors C1 and C2, and at least one of the first detection point P1 and the second detection point P2 is located between the first switch group S1 and the anti-reverse circuit 11. When the first switch group S1 is turned on, the voltage between the first detection point P1 and the second detection point P2 is equal to a voltage at the direct current input end of the DC/DC power conversion circuit 12, and the controller is configured to send the foregoing alarm signal.

Specifically, when the first switch group S1 is turned on, a connection line between the first photovoltaic string PV1 and the direct current input end of the DC/DC power conversion circuit 12 is conducted, and the voltage between the first detection point P1 and the second detection point P2 is equal to the voltage at the direct current input end of the DC/DC power conversion circuit 12. The voltage at the direct current input end of the DC/DC power conversion circuit 12 may be equivalent to a voltage output by the second photovoltaic string to the direct current input end of the DC/DC power conversion circuit 12. When the first switch group S1 is turned off, the connection line between the first photovoltaic string PV1 and the direct current input end of the DC/DC power conversion circuit 12 is not conducted. In this case, the voltage between the first detection point P1 and the second detection point P2 is approximately equal to 0.

It should be noted that, that at least one of the first detection point P1 and the second detection point P2 is located between the first switch group S1 and the anti-reverse circuit 11 means that at least one of the first detection point P1 and the second detection point P2 is located between the first switch group S1 and an output end of the anti-reverse circuit 11. In other words, that the detection point is located inside the anti-reverse circuit 11 also means "located between the first switch group S1 and the anti-reverse circuit 11".

With this arrangement, detection precision of the voltage between the first detection point P1 and the second detection point P2 can be improved, and impact of voltages at two ends of the first photovoltaic string PV1 and the voltage at the direct current input end of the DC/DC power conversion circuit 12 on detection precision can be avoided. For example, if both the first detection point P1 and the second detection point P2 are disposed between the first photovoltaic string PV1 and the first switch group S1, regardless of whether the first switch group S 1 is turned on or turned off, provided that there are voltages at two ends of the first photovoltaic string PV1 connected to the photovoltaic inverter, there is a voltage between the first detection point P1 and the second detection point P2, and the voltage is approximately equal to the voltages at the two ends of the first photovoltaic string PV1. In other words, it is difficult for a detection result of the voltage between the first detection point P1 and the second detection point P2 to reflect a status of the first switch group S1. For example, if both the first detection point P1 and the second detection point P2 are disposed between the output end of the anti-reverse circuit 11 and the direct current input end of the DC/DC power conversion circuit 12, when the second switch group S2 is turned on, regardless of whether the first switch group S1 is turned on or turned off, there is a voltage between the first detection point P1 and the second detection point P2, and the voltage is approximately equal to the voltage at the direct current input end of the DC/DC power conversion circuit 12. In other words, it is also difficult for a detection result of the voltage between the first detection point P1 and the second detection point P2 to reflect a status of the first switch group S1.

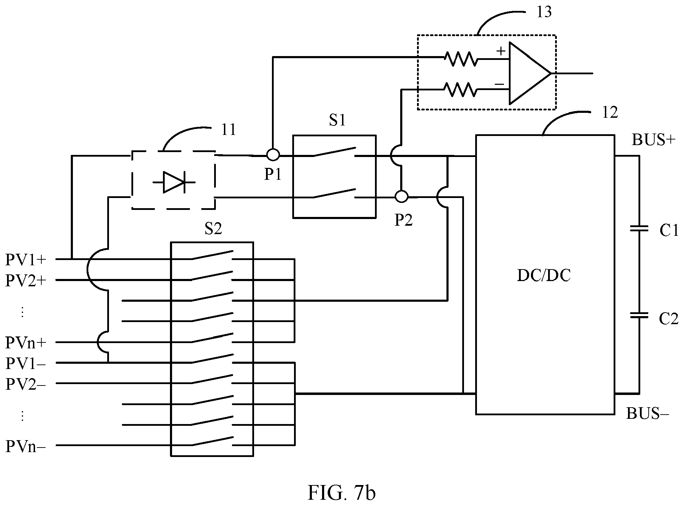

Refer to FIG. 7b. Different from the topology shown in FIG. 7a, in FIG. 7b, connection positions of the anti-reverse circuit 11 (for a specific structure, refer to the description above, and examples are not enumerated) and the first switch group S1 are interchanged. One end of the anti-reverse circuit 11 is connected to the direct current input end of the DC/DC power conversion circuit 12 via the first switch group S1, the other end of the anti-reverse circuit 11 is configured to connect to the first photovoltaic string PV1, and a voltage detection circuit 13 is configured to detect a voltage between a first detection point P1 and a second detection point P2. The first detection point P1 is located between a positive electrode PV1+ of the first photovoltaic string and the bus capacitors C1 and C2, the second detection point P2 is located between a negative electrode PV1- of the first photovoltaic string and the bus capacitors C1 and C2, one of the first detection point P1 and the second detection point P2 is located between the first photovoltaic string PV1 and the first switch group S1, and the other of the first detection point P1 and the second detection point P2 is located between the first switch group S1 and the direct current input end of the DC/DC power conversion circuit 12. When the first switch group is turned on, the voltage between the first detection point P1 and the second detection point P2 is equal to a voltage at the direct current input end of the DC/DC power conversion circuit 12, and the controller is configured to send the alarm signal (refer to the description above).

Specifically, when the first switch group S1 is turned on, a connection line between the first photovoltaic string PV1 and the direct current input end of the DC/DC power conversion circuit 12 is conducted, and the voltage between the first detection point P1 and the second detection point P2 is equal to the voltage at the direct current input end of the DC/DC power conversion circuit 12. The voltage at the direct current input end of the DC/DC power conversion circuit 12 may be equivalent to a voltage output by the second photovoltaic string to the direct current input end of the DC/DC power conversion circuit 12. When the first switch group S1 is turned off, the connection line between the first photovoltaic string PV1 and the direct current input end of the DC/DC power conversion circuit 12 is not conducted. In this case, the voltage between the first detection point P1 and the second detection point P2 is approximately equal to 0.

With this arrangement, detection precision of the voltage between the first detection point P1 and the second detection point P2 can be improved, and impact of voltages at two ends of the first photovoltaic string PV1 and the voltage at the direct current input end of the DC/DC power conversion circuit 12 on detection precision can be avoided. For example, if both the first detection point P1 and the second detection point P2 are disposed between the first photovoltaic string PV1 and the first switch group S1, regardless of whether the first switch group S 1 is turned on or turned off, provided that there are voltages at two ends of the first photovoltaic string PV1 connected to the photovoltaic inverter, there is a voltage between the first detection point P1 and the second detection point P2, and the voltage is approximately equal to the voltages at the two ends of the first photovoltaic string PV1. In other words, it is difficult for a detection result of the voltage between the first detection point P1 and the second detection point P2 to reflect a status of the first switch group S1. For example, if both the first detection point P1 and the second detection point P2 are disposed between the first switch group S1 and the direct current input end of the DC/DC power conversion circuit 12, when the second switch group S2 is turned on, regardless of whether the first switch group S1 is turned on or turned off, there is a voltage between the first detection point P1 and the second detection point P2, and the voltage is approximately equal to the voltage at the direct current input end of the DC/DC power conversion circuit 12. In other words, it is also difficult for a detection result of the voltage between the first detection point P1 and the second detection point P2 to reflect a status of the first switch group S1.

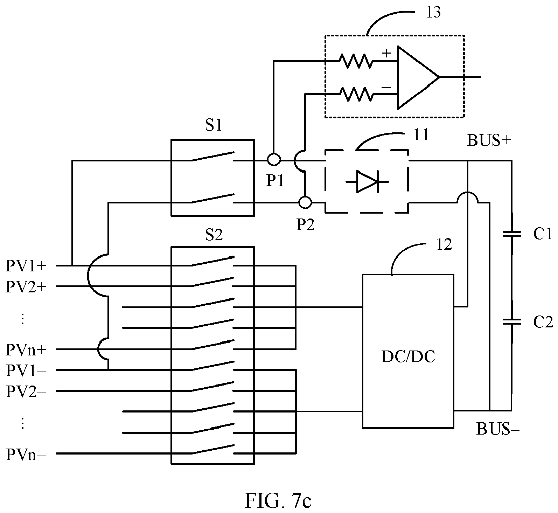

Refer to FIG. 7c. Different from the topology shown in FIG. 7a, in FIG. 7c, one end of the first switch group S1 is connected to the direct current output end of the DC/DC power conversion circuit 12 via the anti-reverse circuit 11 (for a specific structure, refer to the description above, and examples are not enumerated), the other end of the first switch group S1 is configured to connect to the first photovoltaic string PV1, and a voltage detection circuit 13 is configured to detect a voltage between a first detection point P1 and a second detection point P2. The first detection point P1 is located between a positive electrode PV1+ of the first photovoltaic string and the bus capacitors C1 and C2, the second detection point P2 is located between a negative electrode PV1- of the first photovoltaic string and the bus capacitors C1 and C2, and at least one of the first detection point P1 and the second detection point P2 is located between the first switch group S1 and the anti-reverse circuit 11. When the first switch group S1 is turned on, the voltage between the first detection point P1 and the second detection point P2 is equal to a voltage at the direct current input end of the DC/DC power conversion circuit 12, and the controller is configured to send the alarm signal (refer to the description above).

Specifically, when the first switch group S1 is turned on, a connection line between the first photovoltaic string PV1 and the direct current output end of the DC/DC power conversion circuit 12 is conducted. Because there is the anti-reverse circuit 11, although a voltage at the direct current output end of the DC/DC power conversion circuit 12 is greater than the voltage at the direct current input end of the DC/DC power conversion circuit 12, the voltage between the first detection point P1 and the second detection point P2 is still equal to the voltage at the direct current input end of the DC/DC power conversion circuit 12. When the first switch group S1 is turned off, the connection line between the first photovoltaic string PV1 and the direct current output end of the DC/DC power conversion circuit 12 is not conducted. In this case, the voltage between the first detection point P1 and the second detection point P2 is approximately equal to 0.

It should be noted that, that at least one of the first detection point P1 and the second detection point P2 is located between the first switch group S1 and the anti-reverse circuit 11 means that at least one of the first detection point P1 and the second detection point P2 is located between the first switch group S1 and an output end of the anti-reverse circuit 11. In other words, that the detection point is located inside the anti-reverse circuit 11 also means "located between the first switch group S1 and the anti-reverse circuit 11".

With this arrangement, detection precision of the voltage between the first detection point P1 and the second detection point P2 can be improved, and impact of voltages at two ends of the first photovoltaic string PV1 and the voltage at the direct current output end of the DC/DC power conversion circuit 12 on detection precision can be avoided. For example, if both the first detection point P1 and the second detection point P2 are disposed between the first photovoltaic string PV1 and the first switch group S1, regardless of whether the first switch group S 1 is turned on or turned off, provided that there are voltages at two ends of the first photovoltaic string PV1 connected to the photovoltaic inverter, there is a voltage between the first detection point P1 and the second detection point P2, and the voltage is approximately equal to the voltages at the two ends of the first photovoltaic string PV1. In other words, it is difficult for a detection result of the voltage between the first detection point P1 and the second detection point P2 to reflect a status of the first switch group S1. For example, if both the first detection point P1 and the second detection point P2 are disposed between the output end of the anti-reverse circuit 11 and the direct current output end of the DC/DC power conversion circuit 12, when the second switch group S2 is turned on, regardless of whether the first switch group S1 is turned on or turned off, there is a voltage between the first detection point P1 and the second detection point P2, and the voltage is approximately equal to voltages at two ends of the bus capacitor C1 and C2, a voltage at the direct current output end of the DC/DC power conversion circuit 12, or a voltage of the direct current bus. In other words, it is also difficult for a detection result of the voltage between the first detection point P1 and the second detection point P2 to reflect a status of the first switch group S1.

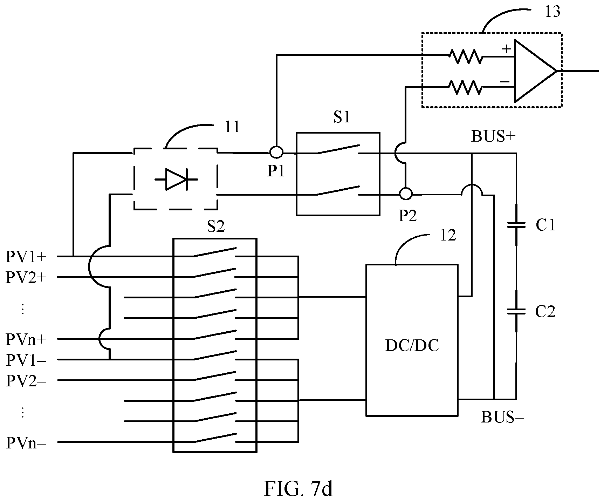

Refer to FIG. 7d. Different from the topology shown in FIG. 7c, in FIG. 7d, one end of the anti-reverse circuit 11 (for a specific structure, refer to the description above, and examples are not enumerated) is connected to the direct current output end of the DC/DC power conversion circuit 12 via the first switch group S1, the other end of the anti-reverse circuit 11 is configured to connect to the first photovoltaic string PV1, and a voltage detection circuit 13 is configured to detect a voltage between a first detection point P1 and a second detection point P2. The first detection point P1 is located between a positive electrode PV1+ of the first photovoltaic string and the bus capacitors C1 and C2, the second detection point P2 is located between a negative electrode PV1- of the first photovoltaic string and the bus capacitors C1 and C2, one of the first detection point P1 and the second detection point P2 is located between the first photovoltaic string and the first switch group S1, and the other of the first detection point P1 and the second detection point P2 is located between the first switch group S1 and the direct current output end of the DC/DC power conversion circuit 12. When the first switch group S1 is turned on, the voltage between the first detection point P1 and the second detection point P2 is equal to a voltage at the direct current input end of the DC/DC power conversion circuit 12, and the controller is configured to send the alarm signal (refer to the description above).

Specifically, when the first switch group S1 is turned on, a connection line between the first photovoltaic string PV1 and the direct current output end of the DC/DC power conversion circuit 12 is conducted. Because there is the anti-reverse circuit 11, although a voltage at the direct current output end of the DC/DC power conversion circuit 12 is greater than the voltage at the direct current input end of the DC/DC power conversion circuit 12, the voltage between the first detection point P1 and the second detection point P2 is still equal to the voltage at the direct current input end of the DC/DC power conversion circuit 12. When the first switch group S1 is turned off, the connection line between the first photovoltaic string PV1 and the direct current output end of the DC/DC power conversion circuit 12 is not conducted. In this case, the voltage between the first detection point P1 and the second detection point P2 is approximately equal to 0.

With this arrangement, detection precision of the voltage between the first detection point P1 and the second detection point P2 can be improved, and impact of voltages at two ends of the first photovoltaic string PV1 and the voltage at the direct current output end of the DC/DC power conversion circuit 12 on detection precision can be avoided. For example, if both the first detection point P1 and the second detection point P2 are disposed between the first photovoltaic string PV1 and the first switch group S1, regardless of whether the first switch group S 1 is turned on or turned off, provided that there are voltages at two ends of the first photovoltaic string PV1 connected to the photovoltaic inverter, there is a voltage between the first detection point P1 and the second detection point P2, and the voltage is approximately equal to the voltages at the two ends of the first photovoltaic string PV1. In other words, it is difficult for a detection result of the voltage between the first detection point P1 and the second detection point P2 is difficult to reflect a status of the first switch group S1. For example, if both the first detection point P1 and the second detection point P2 are disposed between the first switch group S1 and the direct current output end of the DC/DC power conversion circuit 12, when the second switch group S2 is turned on, regardless of whether the first switch group S1 is turned on or turned off, there is a voltage between the first detection point P1 and the second detection point P2, and the voltage is approximately equal to voltages at two ends of the bus capacitor C1 and C2, a voltage at the direct current output end of the DC/DC power conversion circuit 12, or a voltage of the direct current bus. In other words, it is also difficult for a detection result of the voltage between the first detection point P1 and the second detection point P2 to reflect a status of the first switch group S1.

It should be noted that the voltage detection circuit 13 shown in FIG. 7a to FIG. 7d each includes an operational amplifier. A positive input end of the operational amplifier is configured to connect to the first detection point P1, a negative input end of the operational amplifier is configured to connect to the second detection point P2, and an output end of the operational amplifier is configured to transmit a signal of the voltage between the first detection point P1 and the second detection point P2 to the controller. In this way, the controller learns of a turn-on or turn-off state of the first switch group S1, and sends an alarm signal when the first switch group S1 is turned on, so that the user turns off the first switch group S1 in a timely manner. During actual application, a current-limiting resistor may be disposed between the positive input end of the operational amplifier and the first detection point P1, or a current-limiting resistor may be disposed between the negative input end of the operational amplifier and the second detection point P2. This is not limited in this application.

In addition, the operational amplifier in FIG. 7a to FIG. 7d is mainly configured to implement a voltage change and improve a capability of outputting a current. Therefore, during actual application, the operational amplifier may alternatively be converted into another component having a similar function. This is not specifically limited.

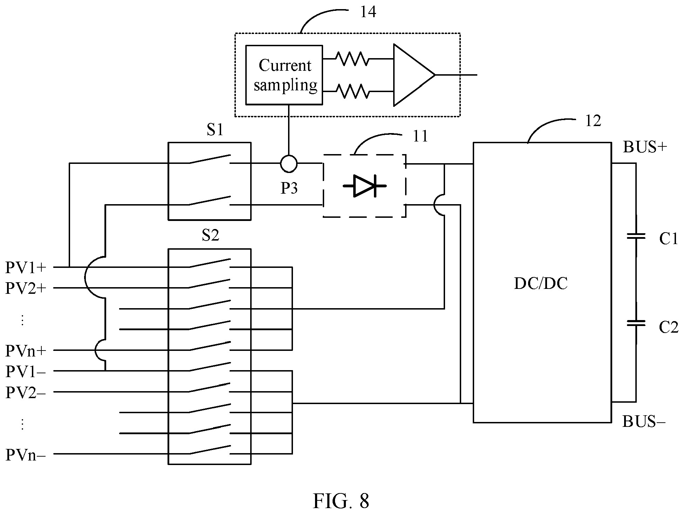

Refer to FIG. 8. Different from the topology shown in FIG. 3, FIG. 8 further includes a switch status detection circuit. The switch status detection circuit is a current detection circuit 14. Specifically, the first photovoltaic string PV1 is connected to the direct current input end of the DC/DC power conversion circuit 12 sequentially via the first switch group S1 and the anti-reverse circuit 11, and the current detection circuit 14 is configured to detect a current flowing through a third detection point P3. The third detection point P3 is located between the first photovoltaic string PV1 and the anti-reverse circuit 11. When the first switch group S1 is turned on, the current flowing through the third detection point P3 is greater than a specified current threshold, and the controller is configured to send the alarm signal (refer to the description above). The specified current threshold is greater than 0 and less than a current at the direct current input end of the DC/DC power conversion circuit 12.

Specifically, when the first switch group S1 is turned on, a connection line between the first photovoltaic string PV1 and the direct current input end of the DC/DC power conversion circuit 12 is conducted, and the current detection circuit 14 may detect a current at the third detection point P3. When the first switch group S1 is turned off, the connection line between the first photovoltaic string PV1 and the direct current input end of the DC/DC power conversion circuit 12 is not conducted, and a current cannot be detected at the third detection point P3.

The third detection point P3 is disposed between the first switch group S1 and the anti-reverse circuit 11, so that detection precision of the current flowing through the third detection point P3 can be improved, and impact of the current at the direct current input end of the DC/DC power conversion circuit on detection precision is avoided.

It should be noted that, during actual application, connection positions of the first switch group S1 and the anti-reverse circuit 11 may alternatively be interchanged. To be specific, the first photovoltaic string PV1 is connected to the direct current input end of the DC/DC power conversion circuit 12 sequentially via the anti-reverse circuit 11 and the first switch group S1. In addition, after being connected in series to the anti-reverse circuit 11, the first switch group S1 may be further connected to the direct current output end of the DC/DC power conversion circuit 12.

In addition, the current detection circuit 14 in FIG. 8 includes a current sampling module and an operational amplifier. The current sampling module is configured to collect the current flowing through the third detection point P3, and transmit a collected current signal to the operational amplifier. The operational amplifier processes the current signal and then transmits a processed current signal to the controller.

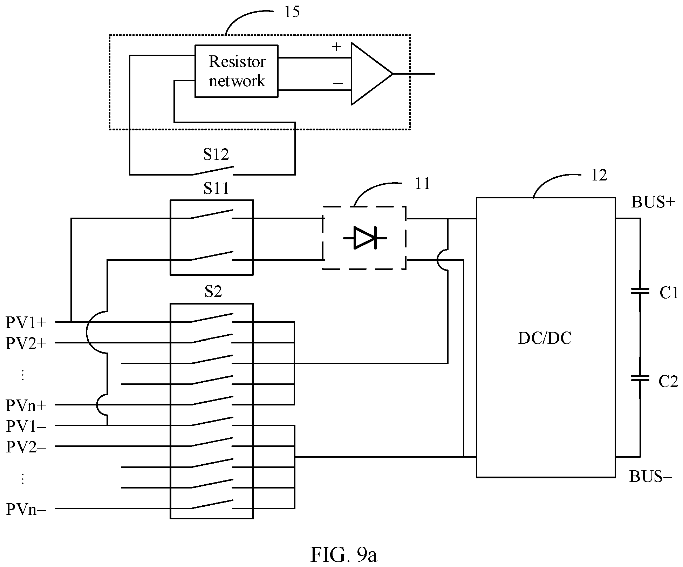

Refer to FIG. 9a. Different from the topology shown in FIG. 3, FIG. 9a further includes a switch status detection circuit, and the first switch group S1 includes a main contact switch S11 and an auxiliary contact switch S12. The switch status detection circuit includes a resistor network 15 and an operational amplifier. One end of the resistor network 15 is configured to connect to the auxiliary contact switch S12, the other end of the resistor network 15 is configured to connect to an input end of the operational amplifier, and the operational amplifier is configured to transmit a signal (which is described in detail below) output by the resistor network 15 to the controller, so that the controller learns of a turn-on or turn-off state of the first switch group S1, and sends the alarm signal (refer to the description above) when the first switch group S1 is turned on. It should be noted that, the main contact switch S11 and the auxiliary contact switch S12 have a same turn-on or turn-off state. The main contact switch S11 is configured to conduct a current, and the auxiliary contact switch S12 is configured to reflect the turn-on or turn-off state of the main contact switch S11. Specifically, in FIG. 9a, one end of the main contact switch S11 is configured to connect to the first photovoltaic string PV1, and the other end of the main contact switch S11 is configured to connect to the bus capacitors C1 and C2 via the anti-reverse circuit 11 and the DC/DC power conversion circuit 12. In other words, the turn-on or turn-off state of the main contact switch S11 determines whether electrical energy generated by the first photovoltaic string PV1 can be smoothly transmitted to the bus capacitors C1 and C2. When the main contact switch S11 is turned on, a direct current output by the first photovoltaic string PV1 flows through the main contact switch S11 and does not flow through the auxiliary contact switch S12. With this arrangement, the switch status detection circuit can indirectly obtain the turn-on or turn-off state of the main contact switch 511. This avoids a large current from flowing through the switch status detection circuit, ensures detection accuracy of the switch status detection circuit, and reduces a fault probability of the switch status detection circuit.

It should be noted that, during actual application, that the other end of the main contact switch S11 is connected to the bus capacitors C1 and C2 includes both a direct connection and an indirect connection. FIG. 9a shows only a case in which the other end of the main contact switch S11 is indirectly connected to the bus capacitors C1 and C2. This is not limited in this application. In other words, that the other end of the main contact switch S11 is connected to the bus capacitors C1 and C2 is a functional description, and in essence, the status of the main contact switch S 11 determines whether the direct current generated by the first photovoltaic string PV1 can be smoothly transmitted to the bus capacitors C1 and C2.

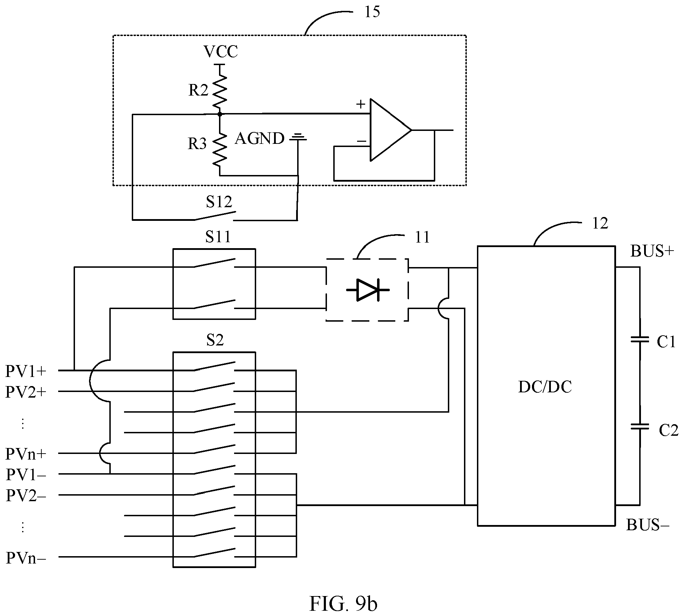

To better describe a working principle of the switch status detection circuit in FIG. 9a, continue to refer to FIG. 9b. FIG. 9b specifically shows a topology of the resistor network 15 in the switch status detection circuit based on FIG. 9a. The resistor network 15 includes a second resistor R2 and a third resistor R3 that have equal resistance values. One end of the second resistor R2 is configured to connect to a stable volt current condenser (VCC), the other end of the second resistor R2 is configured to connect to an analog ground (AGND) via the third resistor R3, and a connection point at which the second resistor R2 and the third resistor R3 are connected in series is configured to connect to the AGND via the auxiliary contact switch S12, the connection point at which the second resistor R2 and the third resistor R3 are connected in series is further configured to connect to a positive input end of the operational amplifier, and a negative input end of the operational amplifier is connected to an output end of the operational amplifier. When the auxiliary contact switch S 12 is turned off, a voltage output to the positive input end of the operational amplifier by the connection point at which the second resistor R2 and the third resistor R3 are connected in series is 1/2 VCC. To be specific, both ends of the second resistor R2 and the third resistor R3 bear the voltage 1/2 VCC. When the auxiliary contact switch S12 is turned on, the third resistor R3 is bypassed, and a voltage output to the positive input end of the operational amplifier by the connection point at which the second resistor R2 and the third resistor R3 are connected in series is 0. To be specific, the second resistor R2 independently bears a voltage of the VCC. Based on this, the switch status detection circuit may output different voltage/current signals to the controller, so that the controller determines the turn-on or turn-off state of the auxiliary contact switch S12. For example, when the auxiliary contact switch S12 is turned on, the voltage output to the positive input end of the operational amplifier by the connection point at which the second resistor R2 and the third resistor R3 are connected in series is 0, the switch status detection circuit outputs a voltage signal with a 0 level to the controller, and the controller is configured to send the alarm signal (refer to the description above), to prompt the user to turn off the first switch group S 1 in a timely manner.

It should be noted that, during actual application, the resistance values of the second resistor R2 and the third resistor R3 may alternatively be unequal. Based on this, when the auxiliary contact switch S12 is turned off, the voltage output to the positive input end of the operational amplifier by the connection point at which the second resistor R2 and the third resistor R3 are connected in series is no longer 1/2 VCC. A specific voltage value may be determined according to a node voltage method. This is not limited in this application.

In addition, the operational amplifier in FIG. 9b is mainly configured to implement a voltage change and improve a capability of outputting a current. Therefore, during actual application, the operational amplifier may alternatively be converted into another component having a similar function. This is not specifically limited.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made on the basis of the technical solutions of the present invention shall fall within the protection scope of the present invention.

## Claims

1. A photovoltaic inverter, wherein the photovoltaic inverter comprises a first switch group, a second switch group, a direct current/direct current, DC/DC power conversion circuit, a bus capacitor, a switch status detection circuit, and a controller, wherein
the first switch group does not have a remote turn-off capability, one end of the first switch group is configured to connect to a first photovoltaic string, and the other end of the first switch group is configured to connect to the bus capacitor, so that when the first switch group is turned on, the controller is enabled to obtain power from the bus capacitor and be powered on;
the second switch group has a remote turn-off capability, one end of the second switch group is configured to connect to a second photovoltaic string, and the other end of the second switch group is configured to connect to a direct current input end of the DC/DC power conversion circuit, wherein the first photovoltaic string is a part of the second photovoltaic string;
a direct current output end of the DC/DC power conversion circuit is connected to the bus capacitor; and
after the controller is powered on and the second switch group is turned on, the switch status detection circuit is configured to detect a turn-on or turn-off state of the first switch group; and if the first switch group is still turned on, the controller is configured to send an alarm signal, wherein the alarm signal is used to prompt a user to turn off the first switch group.

2. The photovoltaic inverter according to claim 1, wherein the photovoltaic inverter comprises an anti-reverse circuit, the anti-reverse circuit is connected in series to the first switch group and then connected between the first photovoltaic string and the bus capacitor, and the anti-reverse circuit is configured to prevent a reverse current from flowing into the bus capacitor when the first switch group is turned on and the first photovoltaic string is reversely connected.

3. The photovoltaic inverter according to claim 2, wherein one end of the anti-reverse circuit is connected to the direct current input end of the DC/DC power conversion circuit via the first switch group, the other end of the anti-reverse circuit is configured to connect to the first photovoltaic string, and the switch status detection circuit is configured to detect a voltage between a first detection point and a second detection point, wherein the first detection point is located between a positive electrode of the first photovoltaic string and the bus capacitor, the second detection point is located between a negative electrode of the first photovoltaic string and the bus capacitor, one of the first detection point and the second detection point is located between the first photovoltaic string and the first switch group, and the other of the first detection point and the second detection point is located between the first switch group and the direct current input end of the DC/DC power conversion circuit; and when the first switch group is turned on, the voltage between the first detection point and the second detection point is equal to a voltage at the direct current input end of the DC/DC power conversion circuit, and the controller is configured to send the alarm signal.

4. The photovoltaic inverter according to claim 2, wherein one end of the anti-reverse circuit is connected to the direct current output end of the DC/DC power conversion circuit via the first switch group, the other end of the anti-reverse circuit is configured to connect to the first photovoltaic string, and the switch status detection circuit is configured to detect a voltage between a first detection point and a second detection point, wherein the first detection point is located between a positive electrode of the first photovoltaic string and the bus capacitor, the second detection point is located between a negative electrode of the first photovoltaic string and the bus capacitor, one of the first detection point and the second detection point is located between the first photovoltaic string and the first switch group, and the other of the first detection point and the second detection point is located between the first switch group and the direct current output end of the DC/DC power conversion circuit; and when the first switch group is turned on, the voltage between the first detection point and the second detection point is equal to a voltage at the direct current input end of the DC/DC power conversion circuit, and the controller is configured to send the alarm signal.

5. The photovoltaic inverter according to claim 2, wherein one end of the first switch group is connected to the direct current input end of the DC/DC power conversion circuit via the anti-reverse circuit, the other end of the first switch group is configured to connect to the first photovoltaic string, and the switch status detection circuit is configured to detect a voltage between a first detection point and a second detection point, wherein the first detection point is located between a positive electrode of the first photovoltaic string and the bus capacitor, the second detection point is located between a negative electrode of the first photovoltaic string and the bus capacitor, and at least one of the first detection point and the second detection point is located between the first switch group and the anti-reverse circuit; and when the first switch group is turned on, the voltage between the first detection point and the second detection point is equal to a voltage at the direct current input end of the DC/DC power conversion circuit, and the controller is configured to send the alarm signal.

6. The photovoltaic inverter according to claim 2, wherein one end of the first switch group is connected to the direct current output end of the DC/DC power conversion circuit via the anti-reverse circuit, the other end of the first switch group is configured to connect to the first photovoltaic string, and the switch status detection circuit is configured to detect a voltage between a first detection point and a second detection point, wherein the first detection point is located between a positive electrode of the first photovoltaic string and the bus capacitor, the second detection point is located between a negative electrode of the first photovoltaic string and the bus capacitor, and at least one of the first detection point and the second detection point is located between the first switch group and the anti-reverse circuit; and when the first switch group is turned on, the voltage between the first detection point and the second detection point is equal to a voltage at the direct current input end of the DC/DC power conversion circuit, and the controller is configured to send the alarm signal.

7. The photovoltaic inverter according to claim 2, wherein one end of the anti-reverse circuit is connected to the direct current input end of the DC/DC power conversion circuit via the first switch group, the other end of the anti-reverse circuit is configured to connect to the first photovoltaic string, and the switch status detection circuit is configured to detect a current flowing through a third detection point P3, wherein the third detection point P3 is located between the first photovoltaic string and the first switch group; and when the first switch group is turned on, the current flowing through the third detection point P3 is greater than a specified current threshold, and the controller is configured to send the alarm signal, wherein the specified current threshold is greater than 0 and less than a current at the direct current input end of the DC/DC power conversion circuit.

8. The photovoltaic inverter according to claim 2, wherein one end of the first switch group is connected to the direct current input end of the DC/DC power conversion circuit via the anti-reverse circuit, the other end of the first switch group is configured to connect to the first photovoltaic string, and the switch status detection circuit is configured to detect a current flowing through a third detection point P3, wherein the third detection point P3 is located between the first photovoltaic string and the anti-reverse circuit; and when the first switch group is turned on, the current flowing through the third detection point P3 is greater than a specified current threshold, and the controller is configured to send the alarm signal, wherein the specified current threshold is greater than 0 and less than a current at the direct current input end of the DC/DC power conversion circuit.

9. The photovoltaic inverter according to claim 2, wherein the first switch group comprises an auxiliary contact switch and a main contact switch, the auxiliary contact switch and the main contact switch have a same turn-on or turn-off state, one end of the main contact switch is configured to connect to the first photovoltaic string, the other end of the main contact switch is configured to connect to the bus capacitor, and the auxiliary contact switch is connected to the switch status detection circuit; and when the auxiliary contact switch is turned on, the controller is configured to send the alarm signal.

10. The photovoltaic inverter according to claim 9, wherein the switch status detection circuit comprises a second resistor, a third resistor, and an operational amplifier, one end of the second resistor is configured to connect to a stable volt current condenser, the other end of the second resistor is configured to connect to a an analog ground via the third resistor, a connection point at which the second resistor and the third resistor are connected in series is configured to connect to the analog ground via the auxiliary contact switch , the connection point at which the second resistor and the third resistor are connected in series is further configured to connect to an input end of the operational amplifier, and an output end of the operational amplifier is connected to the controller.

11. The photovoltaic inverter according to claim 10, wherein when the auxiliary contact switch is turned on, the connection point at which the second resistor and the third resistor are connected in series outputs a zero voltage to the operational amplifier, the operational amplifier is configured to output a zero level to the controller, and the controller is configured to send the alarm signal.

12. The photovoltaic inverter according to any one of claims 1 to 11, wherein the photovoltaic inverter comprises an indicator light; and if the first switch group is turned on to enable the controller to obtain power from the bus capacitor and be powered on, the indicator light is on, wherein that the indicator light is on indicates the user to turn on the second switch group; and
after the second switch group is turned on, if the first switch group is still turned on, that the controller is configured to send an alarm signal comprises: the controller is configured to control a color change of the indicator light; and the controller is configured to control a blinking frequency change of the indicator light.

13. The photovoltaic inverter according to any one of claims 1 to 11, wherein the photovoltaic inverter comprises an alarm light; and after the second switch group is turned on, if the first switch group is still turned on, that the controller is configured to send an alarm signal comprises: the controller is configured to control the alarm light to be on.

14. The photovoltaic inverter according to any one of claims 1 to 11, wherein after the second switch group is turned on, if the first switch group is still turned on, that the controller is configured to send an alarm signal comprises: the controller is configured to send the alarm signal to an application, a client, or a master computer.

15. The photovoltaic inverter according to claim 2, wherein the anti-reverse circuit comprises one or more diodes, and a conduction direction of the diode is opposite to a direction of the reverse current.
